# EUROPÄISCHE PATENTANMELDUNG

(11) **EP 4 438 399 A1**
(43) Veröffentlichungstag der Anmeldung: **02.10.2024**
(21) Anmeldenummer: 24162087.1
(22) Anmeldetag: 07.03.2024
(51) Int. Cl.: B60N 2/015, B60N 2/06, B60N 2/07, B60N 2/24, B62D 25/20

(54) **FREIZEITFAHRZEUG UND MODULARE GESTELLANBINDUNG, INSBESONDERE SITZTRUHENANBINDUNG**

(30) Priorität: 19.03.2023 DE 102023106826
(71) Anmelder: Bürstner GmbH & CO. KG, 77694 Kehl (DE)
(72) Erfinder: En-Najmi, Youssef, 77704 Oberkirch (DE)
(74) Vertreter: Müller Schupfner & Partner Patent- und Rechtsanwaltspartnerschaft mbB (Muc)

(57) **Zusammenfassung**

Modulare Gestellanbindung (1), insbesondere Sitztruhenanbindung, für ein Freizeitfahrzeug (2), insbesondere ein Wohnmobil, mit einem Schienensystem (3) und einem Metallblech (4), das im montierten Zustand zumindest mittelbar mit einer Bodenplatte (5) des Freizeitfahrzeugs (2) und/oder zumindest mittelbar mit einer Karosserie (6) des Freizeitfahrzeugs (2) verbunden ist, wobei das Schienensystem (3) so ausgestaltet ist, dass ein Gestell (7) des Freizeitfahrzeugs (2) an wählbaren Befestigungsstellen (8) mit dem Schienensystem (3) verbindbar ist und wobei das Schienensystem (3) im montierten Zustand mit dem Metallblech (4) verbunden ist. Ferner ist Freizeitfahrzeug (2) mit solch einer modularen Gestellanbindung (1) angegeben.

## Beschreibung

Die Erfindung betrifft das Gebiet der Freizeitfahrzeuge, insbesondere der Wohnmobile, wobei ein Gestell für eine Truhe, insbesondere eine Sitztruhe, oder dergleichen im Freizeitfahrzeug befestigt wird.

Ein Freizeitfahrzeug, insbesondere ein Wohnmobil, kann auf der Basis eines Serienfahrzeugs hergestellt werden. Hierbei können unterschiedliche Serienfahrzeuge in Bezug auf den jeweiligen Anwendungsfall, insbesondere die Größe des Wohnmobils, zum Einsatz kommen. Dadurch ergeben sich unterschiedliche Karosserietypen, was unterschiedliche Truhenanbindungen, insbesondere für eine Sitztruhe, zur Folge hat. Solche Anbindungen können quer zur Fahrtrichtung kaum oder gar nicht verschiebbar sein. Bei einer Änderung des Grundrisses des Freizeitfahrzeugs kann dann ein neues Gutachten für die Truhenanbindung erforderlich sein, um die Zulassungsbedingungen zu erfüllen. Ferner kann sich die Montage aufwändig gestalten.

Aufgabe der Erfindung ist es, eine modulare Gestellanbindung, insbesondere Sitztruhenanbindung, für ein Freizeitfahrzeug, insbesondere ein Wohnmobil, und ein Freizeitfahrzeug anzugeben, die eine verbesserte Ausgestaltung aufweisen. Insbesondere ist es eine Aufgabe der Erfindung eine Abhängigkeit der Anbindung vom Fahrgestell und vom Grundriss zu reduzieren. Ferner kann eine Aufgabe der Erfindung sein, die Montage zu vereinfachen.

Die Aufgabe wird durch eine modulare Gestellanbindung mit den Merkmalen des unabhängigen Patentanspruchs 1 und durch ein Freizeitfahrzeug mit den Merkmalen des Patentanspruchs 9 gelöst. Vorteilhafte Weiterbildungen der Erfindung sind in den Unteransprüchen angegeben.

Die Aufgabe wird durch eine modulare Gestellanbindung, insbesondere Sitztruhenanbindung, für ein Freizeitfahrzeug, insbesondere ein Wohnmobil, mit einem Schienensystem und einem Metallblech, das im montierten Zustand zumindest mittelbar mit einer Bodenplatte des Freizeitfahrzeugs und/oder zumindest mittelbar mit einer Karosserie des Freizeitfahrzeugs verbunden ist, gelöst, wobei das Schienensystem so ausgestaltet ist, dass ein Gestell des Freizeitfahrzeugs an wählbaren Befestigungsstellen mit dem Schienensystem verbindbar ist und wobei das Schienensystem im montierten Zustand mit dem Metallblech verbunden ist.

Ferner wird die Aufgabe durch ein Freizeitfahrzeug, insbesondere ein Wohnmobil, mit zumindest einem Gestell und zumindest einer solchen modularen Truhenanbindung gelöst.

Die Bodenplatte, die Karosserie und das Gestell des Freizeitfahrzeugs sind nicht notwendigerweise Bestandteile der modularen Gestellanbindung. Insbesondere kann die modulare Gestellanbindung auch ohne solche Bauteile hergestellt und vertrieben werden.

Vorteilhaft ist es, dass das Schienensystem im montierten Zustand mittels einer Hybridverbindung, die zumindest eine formschlüssige Verbindung und zumindest eine stoffschlüssige Verbindung umfasst, mit dem Metallblech verbunden ist. Die formschlüssige Verbindung kann beispielsweise eine Schraubverbindung sein. Bei solch einer Schraubverbindung kann zusätzlich ein Reibschluss entstehen. Die stoffschlüssige Verbindung ist vorzugsweise durch Kleben realisiert. Somit kann eine zuverlässige Verbindung realisiert werden, die eine Kraftübertragung in der Fläche ermöglicht.

Vorteilhaft ist es auch, dass mehrere formschlüssige Verbindungen vorgesehen sind, um im montierten Zustand eine über das Schienensystem vergleichmäßigte Krafteinleitung von dem Schienensystem in das Metallblech zu ermöglichen, wenn eine Kraft an dem Gestell wirkt. Somit ist eine vorteilhafte Krafteinleitung ermöglicht. Dadurch wird auch eine Ableitung als Flächenkräfte über das Metallblech ermöglicht.

Vorteilhaft ist es, dass das Schienensystem eine erste Schiene und zumindest eine zweite Schiene aufweist, dass das Gestell im montierten Zustand mit der ersten Schiene und der zweiten Schiene verbunden ist und dass das Metallblech im montierten Zustand mit der ersten Schiene und der zweiten Schiene verbunden ist. Hierbei ist es ferner vorteilhaft, dass die erste Schiene und die zweite Schiene im montierten Zustand in einen Laufboden des Freizeitfahrzeugs integriert sind. Hierdurch wird ein vorteilhafter Aufbau ermöglicht. Insbesondere ergibt sich ein kompakter Aufbau, der eine vorteilhafte Krafteinleitung in die Karosserie ermöglicht. Im Unterschied zu einer herkömmlichen Ausgestaltung, bei der Biegemomente auf die Karosserie, insbesondere Längsträger der Karosserie, wirken, kann eine großflächige Ableitung der Kräfte in beispielsweise einen Gitterrahmen erfolgen, was teilweise sogar als Zugbelastung erfolgen kann.

Ferner ist es vorteilhaft, dass das Schienensystem so ausgestaltet ist, dass das Gestell bei einem zeitweisen Lösen der Verbindung zwischen dem Gestell und dem Schienensystem bezüglich dem Schienensystem verstellbar, insbesondere verschiebbar, ist. Hierdurch ergibt sich eine weitere Funktionsverbesserung.

Ferner ist es vorteilhaft, dass das Metallblech im montierten Zustand in den Laufboden, insbesondere in einen glasfaserverstärkten Kunststoff des Laufbodens, eingebettet oder mit dem Laufboden verklebt ist. Auf diese Weise kann auch eine holzfreie Bodenplatte für den Laufboden realisiert werden. Insbesondere kann somit eine Hybridplatte realisiert werden, bei der zusätzlich eine Funktionsintegration realisiert ist. Somit kann eine standardisierte und modulare Anbindung, insbesondere Truhenanbindung realisiert werden, die eine Karosserieanbindung ermöglicht und grundrissbezogen frei verschiebbar sein kann.

Außerdem ist es vorteilhaft, dass das Metallblech im montierten Zustand mittels einer Metallverbindung und einer stoffschlüssigen Verbindung mit zumindest einem Träger, insbesondere zumindest einem Längsträger, der Karosserie verbunden ist. Hierdurch kann eine vorteilhafte Hybridverbindung realisiert werden. Die Metallverbindung dient hierbei zu Erstellung einer prozesssicheren Hybridverbindung, die vorzugsweise ein Kleben und ein mechanisches Fügen umfasst.

In vorteilhafter Weise ist das Gestell als Truhengestell einer Truhe und/oder als Sitzgestell eines Sitzes und/oder als Sitztruhengestell einer Sitztruhe ausgebildet. Hierbei kann eine universelle Lösung realisiert werden, die für mehrere Karosserietypen zum Einsatz kommen kann. Insbesondere kann eine Ausgestaltung realisiert werden, bei der eine Anpassung an unterschiedliche Grundrisse des Freizeitfahrzeugs möglich ist, ohne dass es einer erneuten Zulassung bedarf.

Hierdurch kann insbesondere die erneute Durchführung eines Zugversuchs eingespart werden.

Außerdem ist es bei dieser Ausgestaltung möglich, eine vorteilhafte Truhe, insbesondere Sitztruhe, zu realisieren, die nicht in den Boden integriert werden muss, nicht aus Vollholz bestehen muss. Ferner wird eine größere Unabhängigkeit von der Stabilität des Laufbodens ermöglicht. Insbesondere kann die Funktionalität nicht durch Fäulnis von Holzeinlegern oder dergleichen beeinträchtigt werden.

Außerdem ergeben sich wesentliche Vorteile, da Reaktionskräfte nicht durch schwere Schraubenverbindung direkt in den Längsträger abgeleitet werden. Denn durch die vorgeschlagene Ausgestaltung können Biegemomente auf den Längsträger (Holme) reduziert werden. Ein weiterer Vorteil besteht darin, dass die Montage vereinfacht werden kann.

Somit können je nach Ausgestaltung ein oder mehrere der folgenden Vorteile realisiert werden. Es kann eine holzfreie Bodenplatte realisiert werden. Holzblöcke oder Holzeinleger können hierbei entfallen. Ferner kann die Komplexität reduziert werden, indem auf Standardbauteile zurückgegriffen wird. Außerdem können verschiebbare Sitze realisiert werden. Des Weiteren kann eine Logistikkette vereinfacht und verbessert werden. Es kann auch eine Gewichtsreduzierung ermöglicht werden. Ferner kann eine Kostenreduzierung ermöglicht werden. Des Weiteren kann eine Bandmontage optimiert werden. Ein Montageprozess kann beschleunigt werden. Außerdem besteht die Möglichkeit, eine Bodengruppe zu definieren.

Weitere Vorteile und Einzelheiten der Erfindung werden anhand der in den schematischen Figuren dargestellten Ausführungsbeispielen näher erläutert. Hierbei zeigen:
- Fig. 1: eine modulare Gestellanbindung in einer schematischen Darstellung;
- Fig. 2: eine modulare Gestellanbindung und ihre Anordnung in einem Freizeitfahrzeug in einer schematischen Darstellung aus der in Fig. 1 mit II bezeichneten Blickrichtung;
- Fig. 3: einen Schnitt durch die in Fig. 2 gezeigte modulare Gestellanbindung und das Freizeitfahrzeug in einer schematischen, auszugsweisen Darstellung;
- Fig. 4: die modulare Gestellanbindung und das Freizeitfahrzeug in einer auszugsweisen, schematischen Schnittdarstellung entsprechend einer abgewandelten Ausgestaltung aus der in Fig. 5 mit IV bezeichneten Blickrichtung;
- Fig. 5: die in Fig. 4 dargestellte modulare Gestellanbindung und das Freizeitfahrzeug entsprechend der abgewandelten Ausgestaltung und
- Fig. 6: die in Fig. 4 dargestellte modulare Gestellanbindung und das Freizeitfahrzeug entsprechend der abgewandelten Ausgestaltung.

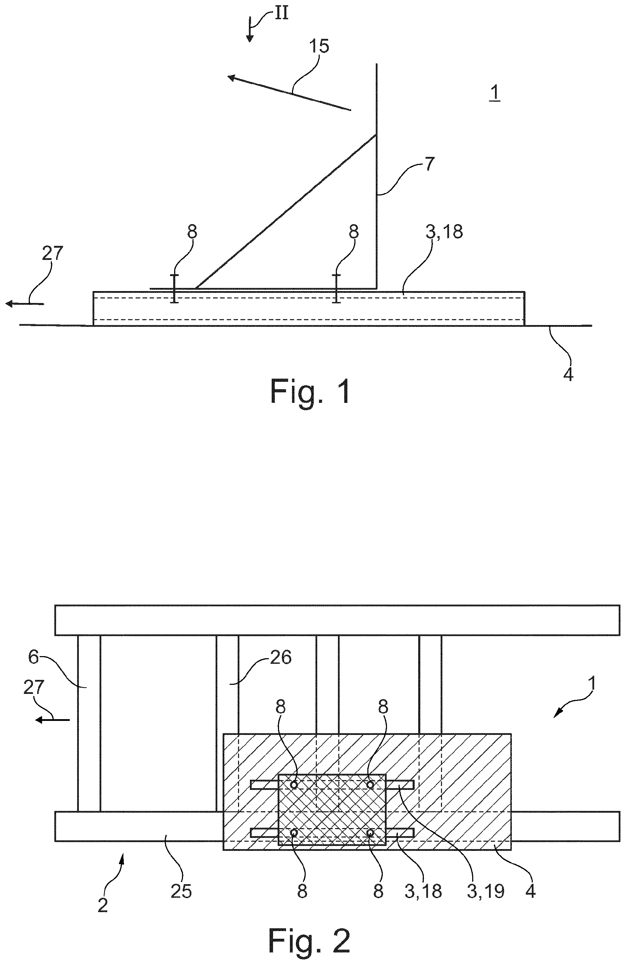

Fig. 1 bis 3 zeigen eine modulare Gestellanbindung und ein Freizeitfahrzeug 2 entsprechend einem Ausführungsbeispiel. Das Freizeitfahrzeug 2 kann hierbei insbesondere als Wohnmobil ausgebildet sein. Die modulare Gestellanbindung 1 ist vorzugsweise als Truhenanbindung 1, insbesondere Sitztruhenanbindung 1, ausgebildet.

Die modulare Gestellanbindung 1 weist ein Schienensystem 3 und ein Metallblech 4 auf. In diesem Ausführungsbeispiel ist eine Bodenplatte 5 vorgesehen. Das Metallblech 4 ist in diesem Ausführungsbeispiel als separates Bauteil ausgestaltet und mit der Bodenplatte 5 verbunden. Ferner ist das Metallblech 4 mit einer Karosserie 6 des Freizeitfahrzeugs 2 verbunden.

Die modulare Gestellanbindung 1 weist ein Gestell 7 auf, das als Truhengestell 7, insbesondere Sitztruhengestell 7, ausgebildet ist. Das Gestell 7 kann hierbei an unterschiedlichen Stellen mit dem Schienensystem 3 verbunden werden. Dadurch ergeben sich wählbare Befestigungsstellen 8, die durch schwere Befestigungsschrauben realisiert sein können. Hierbei können insbesondere die Gewinde M12 und M16 zum Einsatz kommen. Zur Vereinfachung der Darstellung sind die Befestigungsstellen hierbei mit den Bezugszeichen 8 versehen.

An den Befestigungsstellen 8 ist das Gestell 7 dann im montierten Zustand mit dem Schienensystem 3 verbunden. Ferner ist das Schienensystem 3 im montierten Zustand mit dem Metallblech 4 verbunden.

Die Verbindung zwischen dem Schienensystem 3 und dem Metallblech 4 ist vorzugsweise als Hybridverbindung 9 realisiert. Die Hybridverbindung 9 umfasst eine formschlüssige Verbindung 10, die als Schraubverbindung 10 realisiert sein kann, und eine stoffschlüssige Verbindung 11, die als Klebeverbindung 11 realisiert sein kann. Hierdurch ist eine flächige Verbindung realisiert.

Außerdem ist in diesem Ausführungsbeispiel zwischen dem separaten Metallblech 4 und der Bodenplatte 5 eine Klebeverbindung 12 vorgesehen.

Um eine vergleichmäßigte Krafteinleitung von dem Schienensystem 3 in das Metallblech 4 zu erreichen, sind mehrere Hybridverbindungen 9 über mehrere formschlüssige Verbindungen 10 realisiert. Zur Vereinfachung der Darstellung sind diese formschlüssigen Verbindungen 10 jeweils mit dem Bezugszeichen 10 versehen.

Wenn eine Kraft 15, insbesondere eine Reaktionskraft 15, auf das Gestell 7 einwirkt, dann kommt es über das Schienensystem 3 zu einer vorteilhaften Krafteinleitung in das Metallblech 4. Hierbei ist zum einen eine großflächige Abstützung an der Bodenplatte 5 und zum anderen eine Kraftübertragung an mehreren Verbindungsstellen und zumindest über eine Klebeverbindung an die Karosserie 6 möglich.

Hierfür weist das Schienensystem 3 eine erste Schiene 18 und eine zweite Schiene 19 auf. Bei der Montage wird das Gestell 7 hierbei mit der ersten Schiene 18 und der zweiten Schiene 19 an mehreren Befestigungsstellen 8 verbunden. Ferner ist das Metallblech 4 im montierten Zustand über mehrere formschlüssige Verbindungen 10 sowie über eine Klebeverbindung 11 mit der ersten Schiene 18 und der zweiten Schiene 19 verbunden. Dadurch ergibt sich eine zuverlässige Befestigung des Gestells 7 an den Schienen 18, 19 des Schienensystems 3, die außerdem eine variable Positionierung des Gestells 7 relativ zu der Bodenplatte 5 erlaubt.

Die Schienen 18, 19 können als Profilschienen ausgestaltet sein. Hierbei kann ein C-Profil oder ein Rechteck-Profil zum Einsatz kommen. Das Schienensystem 3 dient dann zur Kraftaufnahme aus dem Gestell 7.

In diesem Ausführungsbeispiel sind die Schienen 18, 19 in die Bodenplatte 5 integriert. Die Bodenplatte 5 ist hierbei als Laufboden 20 ausgestaltet.

Bei einer abgewandelten Ausgestaltung kann das Schienensystem 3 auch so ausgestaltet sein, dass von einem Benutzer eine variable Montage des Gestells 7 an den Schienen 18, 19 möglich ist. Hierfür können die Befestigungsstellen 8 durch lösbare Befestigungsmittel realisiert sein. Je nach Ausgestaltung der Schienen 18, 19 kann hierbei auch eine Verschiebung des Gestells 7 entlang der Schienen 18, 19 ermöglicht sein.

Das Metallblech 4 ist außerdem mit der Karosserie 6 verbunden, wobei vorzugsweise eine Metallverbindung 21 und eine stoffschlüssige Verbindung 22 vorgesehen sind. Durch die Metallverbindung 21 und die stoffschlüssige Verbindung 22, die eine Klebeverbindung 22 sein kann, ist eine Hybridverbindung 22 zwischen dem Metallblech 4 und beispielsweise einem Träger 25, insbesondere einem Längsträger 25, der Karosserie 6 realisiert. Hierbei ist aber auch eine Verbindung mit anderen Elementen der Karosserie 6, beispielsweise mit einem Querträger (Quertraverse) 26 möglich. Auf diese Weise können die Schienen 18, 19 beispielsweise entlang einer Fahrtrichtung 27 orientiert sein.

Die Metallverbindung 21 zwischen dem Metallblech 4 und dem Träger 25 kann formschlüssige Verbindungsmittel, insbesondere Schrauben, Bolzen oder Nieten, und weitere Verbindungselemente 31, insbesondere Winkel 31, aufweisen.

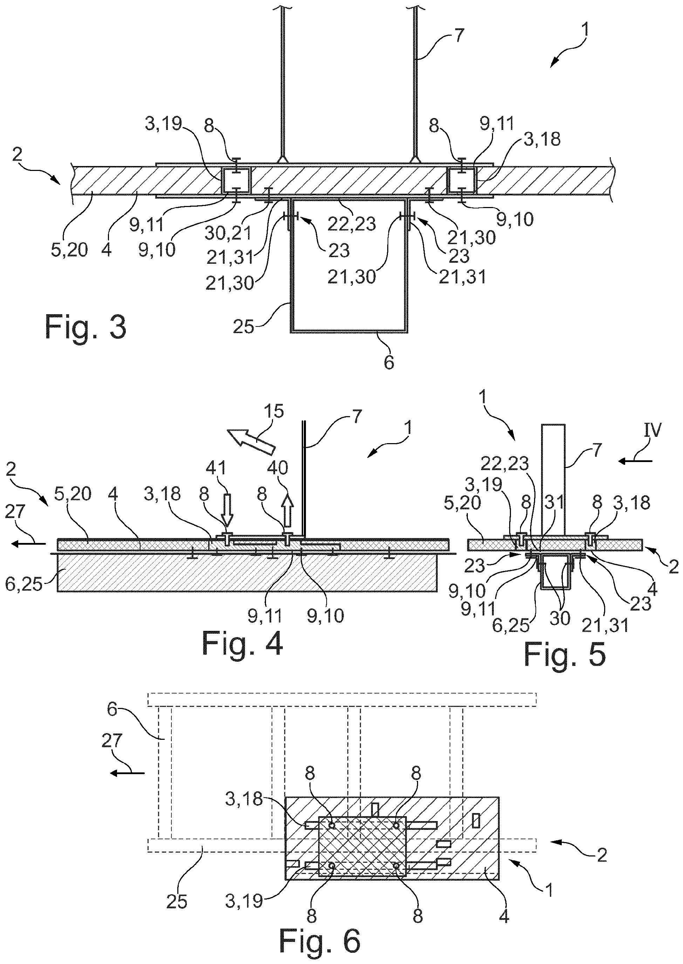

Fig. 4 bis 6 zeigen eine modulare Gestellanbindung 1 und ein Freizeitfahrzeug 2 entsprechend einer abgewandelten Ausgestaltung. In diesem Ausführungsbeispiel ist das Metallblech 4 in die Bodenplatte 5, insbesondere den Laufboden 20, eingebettet. Speziell kann das Metallblech 4 in einen glasfaserverstärkten Kunststoff der Bodenplatte 5 eingebettet sein.

Wenn die Kraft 15 wirkt, die als Vergleichskraft aus zwei Dreipunktgurten resultieren kann, dann können Reaktionskräfte 40, 41 an den Befestigungsstellen 8 wirken. Hierbei können Druckkräfte 41 und Zugkräfte 40 auftreten.

Die Erfindung ist nicht auf die beschriebenen Ausführungsformen beschränkt.

## Patentansprüche

1. Modulare Gestellanbindung (1), insbesondere Sitztruhenanbindung, für ein Freizeitfahrzeug (2), insbesondere ein Wohnmobil, mit einem Schienensystem (3) und einem Metallblech (4), das im montierten Zustand zumindest mittelbar mit einer Bodenplatte (5) des Freizeitfahrzeugs (2) und/oder zumindest mittelbar mit einer Karosserie (6) des Freizeitfahrzeugs (2) verbunden ist, wobei das Schienensystem (3) so ausgestaltet ist, dass ein Gestell (7) des Freizeitfahrzeugs (2) an wählbaren Befestigungsstellen (8) mit dem Schienensystem (3) verbindbar ist und wobei das Schienensystem (3) im montierten Zustand mit dem Metallblech (4) verbunden ist.

2. Modulare Gestellanbindung nach Anspruch 1,
**dadurch gekennzeichnet,**
**dass** das Schienensystem (3) im montierten Zustand mittels einer Hybridverbindung (9), die zumindest eine formschlüssige Verbindung (10) und zumindest eine stoffschlüssige Verbindung (11) umfasst, mit dem Metallblech (4) verbunden ist.

3. Modulare Gestellanbindung nach Anspruch 2,
**dadurch gekennzeichnet,**
**dass** mehrere formschlüssige Verbindungen (10) vorgesehen sind, um im montierten Zustand eine über das Schienensystem (3) vergleichmäßigte Krafteinleitung von dem Schienensystem (3) in das Metallblech (4) zu ermöglichen, wenn eine Kraft (15) an dem Gestell (7) wirkt.

4. Modulare Gestellanbindung nach einem der Ansprüche 1 bis 3,
**dadurch gekennzeichnet,**
**dass** das Schienensystem (3) eine erste Schiene (18) und zumindest eine zweite Schiene (19) aufweist, dass das Gestell (7) im montierten Zustand mit der ersten Schiene (18) und der zweiten Schiene (19) verbunden ist und dass das Metallblech (4) im montierten Zustand mit der ersten Schiene (18) und der zweiten Schiene (19) verbunden ist.

5. Modulare Gestellanbindung nach Anspruch 4,
**dadurch gekennzeichnet,**
**dass** die erste Schiene (18) und die zweite Schiene (19) im montierten Zustand in die Bodenplatte (5), insbesondere einen Laufboden (20), des Freizeitfahrzeugs (1) integriert sind.

6. Modulare Gestellanbindung nach einem der Ansprüche 1 bis 5,
**dadurch gekennzeichnet,**
**dass** das Schienensystem (3) so ausgestaltet ist, dass das Gestell (7) bei einem zeitweisen Lösen der Verbindung zwischen dem Gestell (7) und dem Schienensystem (3) bezüglich dem Schienensystem (3) verstellbar, insbesondere verschiebbar, ist.

7. Modulare Gestellanbindung nach einem der Ansprüche 1 bis 6,
**dadurch gekennzeichnet,**
**dass** das Metallblech (4) im montierten Zustand in die Bodenplatte (5), insbesondere einen Laufboden (20), und insbesondere einen glasfaserverstärkten Kunststoff der Bodenplatte (5), insbesondere des Laufbodens (20), eingebettet oder mit der Bodenplatte (5), insbesondere dem Laufboden (20), verklebt ist.

8. Modulare Gestellanbindung nach einem der Ansprüche 1 bis 7,
**dadurch gekennzeichnet,**
**dass** das Metallblech (4) im montierten Zustand mittels einer Metallverbindung (21) und einer stoffschlüssigen Verbindung (22) mit zumindest einem Träger, insbesondere zumindest einem Längsträger (25), der Karosserie (6) verbunden ist.

9. Freizeitfahrzeug (2), insbesondere Wohnmobil, mit zumindest einem Gestell (7) und zumindest einer modularen Gestellanbindung (1) nach einem der Ansprüche 1 bis 8.

10. Freizeitfahrzeug nach Anspruch 9,
**dadurch gekennzeichnet,**
**dass** das Gestell (7) als Truhengestell (7) einer Truhe und/oder als Sitzgestell (7) eines Sitzes und/oder als Sitztruhengestell (7) einer Sitztruhe ausgebildet ist.
